Europäisches Patentamt

European Patent Office

Office européen des brevets

(19)

(11) Veröffentlichungsnummer: **0 264 370**
**B1**

(12) # EUROPÄISCHE PATENTSCHRIFT

(45) Veröffentlichungstag der Patentschrift: 29.08.90

(51) Int. Cl.⁵: **B 60 C 23/04**

(21) Anmeldenummer: 86903217.7

(22) Anmeldetag: 20.05.86

(86) Internationale Anmeldenummer:
PCT/DE86/00211

(87) Internationale Veröffentlichungsnummer:
WO 87/00128 15.01.87 Gazette 87/01

(54) DRUCKSENSOR.

(30) Priorität: 03.07.85 DE 3523774

(43) Veröffentlichungstag der Anmeldung:
27.04.88 Patentblatt 88/17

(45) Bekanntmachung des Hinweises auf die
Patenterteilung:
29.08.90 Patentblatt 90/35

(84) Benannte Vertragsstaaten:
DE FR GB IT SE

(56) Entgegenhaltungen:
DE-A-2 936 213
FR-A-2 177 947
FR-A-2 211 701
FR-A-2 241 420
FR-A-2 404 375
US-A-3 249 916
US-A-3 974 477

(73) Patentinhaber: ROBERT BOSCH GMBH
Postfach 50
D-7000 Stuttgart 1 (DE)

(72) Erfinder: ECKARDT, Dieter
Gibitzenhofstrasse 17
D-8500 Nürnberg (DE)
Erfinder: HETTICH, Gerhard
Holzgraben 30
D-8501 Rosstal (DE)
Erfinder: METZGER, Kurt
Hertingsbergstrasse 31
D-8507 Oberasbach (DE)
Erfinder: POLSTER, Sonja
Künhoferstrasse 23
D-8500 Nürnberg (DE)
Erfinder: SCHMID, Hans-Dieter
Kamenzerstrasse 5
D-8500 Nürnberg 60 (DE)
Erfinder: SCHMIDT, Hans-Jörg
Schottenfeld 5
D-8501 Feucht 1 (DE)
Erfinder: SCHRUMPF, Hans
Hebelstrasse 5
D-8507 Oberasbach (DE)

EP 0 264 370 B1

Courier Press, Leamington Spa, England.

## Beschreibung

Die Erfindung richtet sich auf einen Drucksensor nach dem Oberbegriff von Anspruch 1 (siehe z.B. DE-A-2 936 213).

Ein derartiger Drucksensor dient zur Erfassng des Luftdrucks im Inneren von sogenannten schlauchlosen Reifen von Kraftfahrzeugen. Der Luftdruck in solchen Reifen ist für die Straßenlage des Fahrzeugs ebenso wie für die Lebensdauer der Reifen von erheblicher Bedeutung. Dementsprechend erscheint es im Rahmen der meßtechnischen Erfassung wichtiger Kraftfahrzeugkenngrößen wünschenswert, auch diesen Reifendruck möglichst genau zu erfassen und zu überwachen.

Die Problematik bei der Gewinnung der entsprechenden Meßwerte liegt darin, daß Reifen beim Betrieb des Kraftfahrzeugs ebenso wie bei der Montage bzw. Demontage erheblichen mechanischen Belastungen unterliegen, welche insbesondere bei an sich wünschenswert empfindlichen Sensoren zu einer Beschädigung derselben führen können. Weiterhin besteht das Problem, daß durch die auftretenden Zentrifugalkräfte Meßwertverfälschungen von Drucksensoren auftreten können.

Aus der US-PS 4 237 728 ist eine Vorrichtung bekannt, welche eine mittelbare grobe Erfassung des Reifendrucks ermöglicht, indem dort von dem trommelförmigen zentralen Felgenteil radial nach außen ein elastisch deformierbarer Fühler absteht, welcher stets dann ausgelenkt wird, wenn der Reifenquerschnitt sich z. B. aufgrund eines Druckabfalls so verändert, daß die Reifeninnenwand zur Anlage an diesen Fühler gelangt. Der Fühler ist mit einem piezoeleketrischen Kristall verbunden, wobei durch die daraus resultierende Kompression des piezoelektrischen Kristalls eine Spannung erzeugt wird, aus welcher das Meßsignal abgeleitet wird. Dieses vorbekannte Meßsystem ist dementsprechend relativ unempfindlich und eignet sich im wesentlichen nur für die Feststellung stark anormaler Zustände. Aufgrund der Unempfindlichkeit des beim Stand der Technik vorgesehenen Fühlers ist die Verfälschung von Meßergebnissen weniger gravierend.

Des weiteren sind aus der US-A 3 974 477, der FR-A 2 241 420, der US-A 3 249 916, der FR-A 2 177 947 und der FR-A 2 404 375 Drucksensoren zur Überwachung des Reifendrucks an Fahrzeugen bekannt, bei denen in einem radfesten Schwingkreis ein Schaltelement vorgesehen ist, welches abhängig vom Reifendruck geöffnet oder geschlossen wird. Der Schaltzustand des Schaltelementes wird dabei durch eine drahtlos eingekoppelte Hochfrequenzschwingung am Schwingkreis abgefühlt. Ferner ist es aus der FR-A 2 211 701 bekannt, einen Dauermagneten abhängig vom Luftdruck im Reifen in einer äußeren oder inneren Position eines Drucksensors in der Radfelge zu halten. Durch eine elektrische Spule an der Radaufhängung wird dort beim Vorbeidrehen des Drucksensors die Position des Dauermagneten abgefragt. Auch diese bekannten Lösungen haben den Nachteil, daß sie sehr unempfindlich sind und lediglich ein Unterschreiten des Luftdrucks im Reifen unter einen zulässigen Wert anzeigen. Eine temperaturabhängige Änderung des zulässigen Druckwertes kann dabei nicht berücksichtigt werden.

Schließlich ist aus der DE-A 2 936 213 ein Drucksensor zur analogen Messung des Reifenluftdrucks bekannt, indem dort zur analogen Erfassung von Reifendruckänderungen zwischen einander zugekehrten Kontaktflächen ein druckabhängig veränderbares Widerstandselement eingesetzt und über die Kontaktflächen dem Reifendruck ausgesetzt ist. Derartige Lösungen haben jedoch den Nachteil, daß bereits durch die Einspannung des Widerstandselementes zwischen den Kontaktflächen im Sensorgehäuse Verspannungen auftreten, welche das Meßergebnis erheblich verfälschen können. Außerdem ist auch hier eine Berücksichtigung der Reifenlufttemperatur bei der Ermittlung des kritischen Reifendrucks nicht möglich.

Hiervon ausgehend liegt der Erfindung die Aufgabe zugrunde, einen Drucksensor der eingangs genannten Art so auszugestalten, daß eine einfache und betriebssichere Montage des gesamten Drucksensors an der Felge ermöglicht wird, wobei Sensorelemente des Drucksensors in diesem spannungsfrei und gegen Beschädigungen geschützt angeordnet sowie mit dem Druck und der Temperatur der Luft im Reifen beaufschlagt sein sollen.

Diese Aufgabe wird beim Drucksensor der eingangs genannten Ausführung gelöst durch die kennzeichnenden Merkmale des Anspruchs 1. Ein solcher analog messender Drucksensor ermöglicht sowohl einen absolut druckdichten Einbau auch bei hohen Fliehkräften in der Felge von außen als auch einen geringen Überstand innerhalb des Reifens und somit eine mechanisch robuste Ausführung.

Außerdem werden bei dieser Lösung voneinander unabhängige Druckmessungen durch unabhängige Sensorelemente ermöglicht, was die Betriebssicherheit wesentlich erhöht. Zum anderen wird durch die Anbringung der Sensorelemente in einem Bereich, welcher völlig frei von Befestigungsspannungen ist, erreicht, daß die Messungen durch derartige Spannungen nicht mehr beeinträchtigt werden.

Eine besonders spannungsfreie Befestigung des Substrats der Sensorelemente wird durch das gemäß Anspruch 2 vorgesehene Vergießen erzielt, da das hierfür beispielsweise verwendete Epoxyharz weitgehend ohne Erzeugung von Spannungen aushärtet und in seiner temperaturabhängigen Ausdehnung dem Substrat angepaßt ist. Diese Befestigungstechnik bietet also gegenüber mechanischen Befestigungen wie Schrauben oder Klemmen erhebliche Vorteile, wobei aber eine vergleichbar hohe Festigkeit erreicht wird.

Durch die Führung der Anschlußleitung gemäß Anspruch 3 ist dies im Inneren des Gehäuses gegen mechanische Beanspruchungen und elektrische Störungen gut geschützt, wobei ein Schutzmantel den durch das Gehäuse gegebenen Schutz über dieses hinaus verlängert. Besonders günstig erfolgt die Verbindung zwischen Gehäuse und einem Schutzmantel aus Edelstahl gemäß Anspruch 4 durch Verschweißen.

Die durch die gemäß Anspruch 5 vorgesehenen Bohrungen gebildeten Lötösen ermöglichen eine einfache und feste Aufnahme der Anschlußleiter und deren Kontaktierung mit den gemäß Anspruch 6 vorgesehenen Leiterbahnen.

Das gemäß Anspruch 7 vorgesehene Vergießen gewährleistet eine hohe mechanische Festigkeit sowie gute elektrische Isolierung, wobei bei einer Kombination mit der Befestigung des Substrats am Gehäuse gemäß Anspruch 8 die Konstruktion besonders einfach wird.

Durch die Anordnung der Sensorelemente auf der Rückseite des Substrats gemäß Anspruch 9 werden sie durch mögliche Fliehkräfte nicht vom Substrat abgezogen sondern dagegen gedrückt. Durch eine gute Wärmeleitung des Substrats werden dabei die Sensorelemente auf der Temperatur der Luft im Reifen gehalten.

Das gemäß Anspruch 10 vorgesehene Gel, z. B. ein Silikon-Gel, schützt die Sensorelemente und die gebondeten Anschlüsse. Aufgrund der erfindungsgemäßen Ausgestaltung wird das Gel durch das Substrat auch bei hohen Fliehkräften zuverlässig in der jeweiligen Ausnehmung gehalten und es wird mit der in Achsrichtung des Drucksensors wirkenden Komponente der Fliehkräfte gegen das Substrat gedrückt.

Weitere Merkmale, Vorteile und Einzelheiten der Erfindung ergeben sich aus der folgenden Beschreibung eines bevorzugten Ausführungsbeispiels anhand der Zeichnung. Dabei zeigen

Fig. 1 einen Schnitt durch eine Felge mit einem erfindungsgemäßen Drucksensor,

Fig. 2 einen Schnitt in Richtung des Pfeils II in Fig. 1 des Drucksensors, und

Fig. 3 eine Draufsicht auf das Substrat mit Sensorelementen und Leiterbahnen.

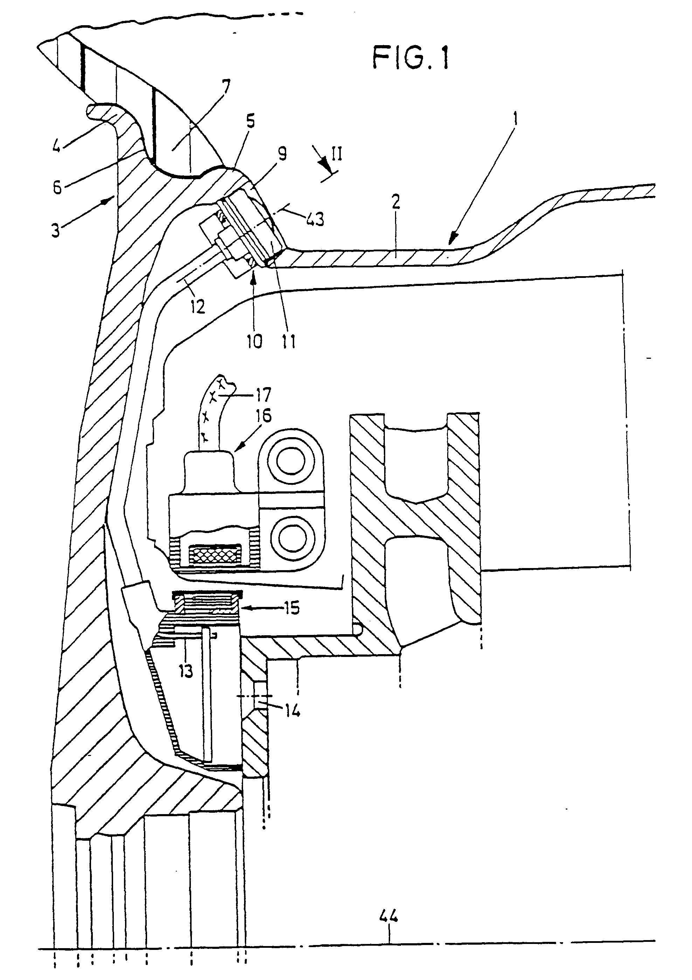

In Fig. 1 ist ausschnittsweise eine Felge 1 dargestellt, welche einen trommelartigen Grundkörper 2 aufweist, an welchem sich zu den Außenrändern hin jeweils ein umlaufender Wulst 3 (wovon in Fig. 1 lediglich einer dargestellt ist) anschließt.

Jeder Wulst 3 umfaßt einen radial außenliegenden ersten Abschnitt 4 und einen radial innenliegenden zweiten Abschnitt 5. Gegen die Innenseite 6 des radial außenliegenden Abschnitts 4 liegt die Wand 7 eines nur abschnittsweise dargestellten Reifens 8 an.

Der radial weiter innenliegende Abschnitt 5 des Wulstes 3 ist mit einer Bohrung 9 zur Aufnahme des Drucksensors 10 versehen.

In das Gehäuse 11 des Drucksensors 10 mündet eine handelsübliche Anschlußleitung. Sie besteht aus einem Edelstahlrohr 12, in welchem mehrere Anschlußleiter 13 in einer Isoliermasse voneinander getrennt geführt sind, welche den Drucksensor 10 mit einer lediglich schematisch gezeichneten, mit der Felge mittels einer Schraube 14 verbundenen Datenübertragungseinrichtung 15 verbinden. Dieser Datenübertragungseinrichtung 15 ist eine fahrzeugseitige, ortsfeste Datenempfängereinrichtung 16 zugeordnet, welche über eine schematisch dargestellte Leitung 17 die von dem Drucksensor 10 abgegebenen elektrischen Meßwerte zu einer zentralen Verarbeitungs- und Anzeigeeinrichtung weiterleitet. Diese Datenübertragung kann mit an sich bekannten Techniken bewerkstelligt werden. Eine diesbezügliche Möglichkeit wird z.B. in der US-PS 4 237 728, welche eingangs erwähnt wurde, beschrieben.

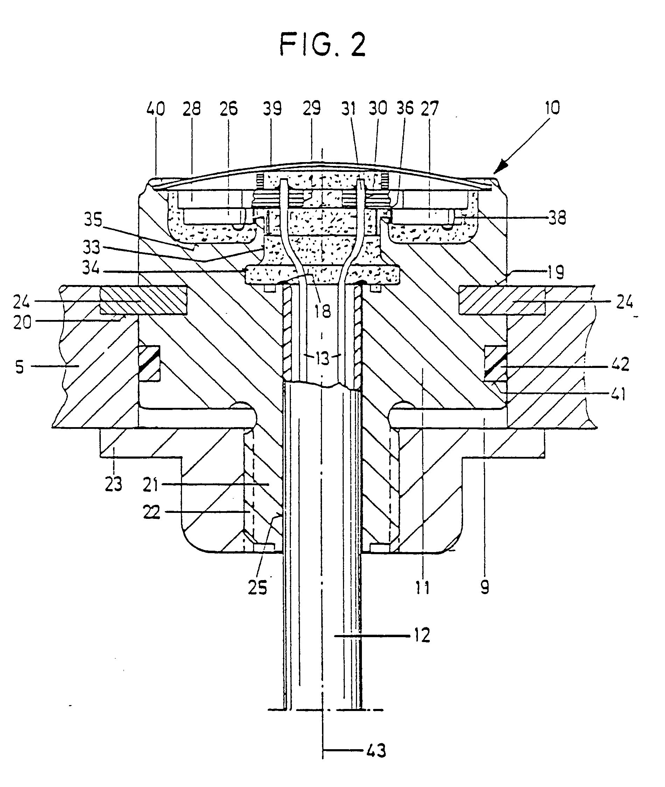

In Fig. 2 ist der in Fig. 1 nur schematisch dargestellte erfindungsgemäße Drucksensor 10 im einzelnen dargestellt. Insbesondere ist aus dieser Figur zu ersehen, daß das Edelstahl-Rohr 12 am oberen Ende mit dem Edelstahlgehäuse 11 mittels der Schweißnaht 18 durch Laser verschweißt ist.

Das Gehäuse 11 weist außen eine umlaufende Ringnut 19 auf. Bei der Montage wird das Gehäuse 11 von außen durch die Bohrung 9 in dem Abschnitt 5 der Felge 1 eingeschoben, woraufhin von beiden Seiten Ringhalbscheiben 24 in die Ringnut 19 eingeschoben werden, welche radial nach außen durch eine Sackbohrung 20 in dem Abschnitt 5 gesichert sind und in dieser so zu liegen kommen, daß die Oberseite mit der Außenfläche des Felgenabschnitts 5 bündig abschließt.

Im Bereich der anderen Bohrungsöffnung der Bohrung 9 weist das Gehäuse 11 einen Gewindeansatz 21 mit einem Außengewinde 22 auf. Über diesen Gewindeansatz ist eine Überwurfmutter 23 mit einem zu dem Außengewinde 22 korrespondierenden Innengewinde geschraubt, wobei die Überwurfmutter 23 die Bohrung 9 außen übergreift und auf diese Weise ein Verspannen des Gehäuses 11 in der Bohrung 9 über die Ringhalbscheiben 24 ermöglicht.

Gewindeansatz 21 und Gehäuse 11 sind einstückig ausgeführt und mit einer Längsbohrung 25 versehen, in welche das Rohr 12 eingreift.

Der erfindungsgemäße Drucksensor 10 umfaßt zwei druckempfindliche Sensorelemente 26, 27, welche im Bereich des Außenrandes eines diese tragenden Keramik-Substrats 28 befestigt sind. Bei diesen Sensorelementen 26, 27 handelt es sich um an sich bekannte Halbleiter-Druckaufnehmer (vgl. z.B. Zeitschrift "Regelungstechnische Praxis, 1982, Heft 7, Seite 223), welche den Piezowiderstand zur Drucksignalbildung ausnutzen. Jedes Sensorelement 26, 27 liefert also ein eigenes Druckwertsignal.

Das Keramiksubstrat 28 hat eine gute Wärmeleitung und weist eine zentrale Bohrung 29 auf. Darüber hinaus ist eine Mehrzahl von Bohrungen 30 mit geringerem Durchmesser ebenfalls im zentralen Bereich um die zentrale Bohrung 29 herum vorgesehen. In diesen Bohrungen 30 sind die Enden 31 der Leiter 13 aufgenommen und mit die Bohrungen 30 umgebende, die Verbindung mit den Anschlüssen der Sensorelemente 26, 27 herstellende Leiterbahnen 32 verlötet.

Zur Befestigung des Substrats 28 im Gehäuse und zum mechanischen und elektrischen Schutz der Kontakte (Leiterbahnen 32 bzw. Leiterenden 31) ist vorn eine zentrale, dem Inneren des Reifens zugewandte Ausnehmung 33 des Gehäuses mit einer Hinterschneidung 34 mit Epoxyharz vergossen, wobei das Substrat 28 an der Ausnehmung 33 mit einem Ring 36 aus Isolierstoff am Gehäuse 11 aufsitzt. Beim Ausgießen durchsetzt das Epoxyharz auch die zentrale Bohrung 29 des Substrats und überdeckt dessen Oberseite. Gleichzeitig gelangt die schlecht wärmeleitende Gießmasse hinter die Hinterschneidung 34. Dies bedeutet, daß Substrat und Gehäuse voneinander thermisch gut isoliert jedoch sowohl in radialer als auch in axialer Richtung fest miteinander verbunden sind, ohne daß hierdurch Spannungen auf das Substrat übertragen werden.

Die Sensoren 26, 27 sind auf der Rückseite, also auf der dem Reifeninneren abgewandten Seite des Substrates 28 angeordnet. Im Bereich unterhalb der Sensoren 26, 27 weist das Gehäuse eine ringförmige Aussparung 35 auf, welche mit einem Silikon-Gel ausgefüllt ist, welches die Sensoren 26, 27 sowie die angebondeten Anschlüsse 38 schützt, welches gleichzeitig aber auch eine Druckübertragung ermöglicht.

Die Oberseite des Substrates 28 ist durch eine Abdeckkappe 39 geschützt, welche durch eine Bördelung 40 am stirnseitigen Ende befestigt ist und im einzelnen nicht dargestellte Öffnungen aufweist, die so dimensioniert sind, daß sie einen Druckausgleich ermöglichen.

Der Gehäusewandbereich des Drucksensors 10, welcher in der Bohrung 9 zu liegen kommt, weise eine Ringnut 41 für einen Dichtungsring 42 auf, wodurch eine hermetische Abdichtung zwischen Außenbereich und dem Inneren des Reifens erreicht wird.

Durch die erfindungsgemäße Anordnung wird erreicht, daß die Sensorlängsachse 43 mit der Felgenachse 44 einen spitzen Winkel einschließt. Anders gesagt bedeutet dies, daß die druckempfindlichen Sensorflächen nahezu senkrecht zur Felgenachse 44 stehen bzw. fast in der Radebene liegen. Dementsprechend wird die Druckmessung durch den Drucksensor 10 bzw. durch die Sensorelemente von Fliehkräften kaum beeinflußt. Durch die Anordnung der Sensorelemente auf der Rückseite des Substrates 28 wird das Gel 37 durch mögliche in der Längsachse des Drucksensors 10 wirkende Komponenten der Fliehkräfte nicht vom Substrat 28 abgezogen sondern dagegen gedrückt. Messungen haben ergeben, daß dadurch verursachte Meßfehler gegebenenfalls geringer sind, als bei einer Anordnung der Sensorelemente 26, 27 auf der Vorderseite des Substrates 28.

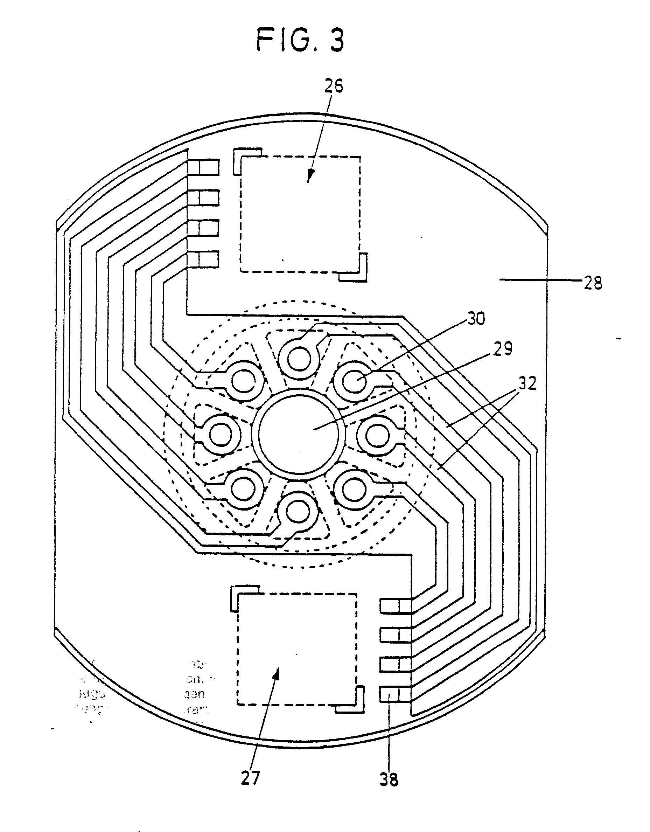

Die in Fig. 3 erkennbare äußere Gestalt des plattenförmigen Substrates 28 muß so gewählt sein, daß die Druckluft im Reifen seitlich am Substrat 28 vorbei auf die an der Rückseite angeordneten Sensorelemente 26, 27 einwirken kann. Dabei wird der zu messende Luftdruck durch das die Sensorelemente abdeckende Gel 37 übertragen.

Der Aufbau des Drucksensors 10 ist so gestaltet, daß er grundsätzlich in einer an beliebiger Stelle der Felge 1 angebrachten Bohrung 9 montiert werden kann. Da die Masse der Sensorelemente 26, 27 sehr klein ist, bleiben auch ihre auf die Sensorelemente einwirkenden Fliehkräfte sehr gering und verursachen nur unerhebliche Meßfehler. Durch die Anordnung des Drucksensors 10 in einem radialen Abschnitt der Felge 1 wird jedoch gewährleistet, daß auch die auf das die Sensorelemente 26, 27 abdeckende Gel 37 einwirkenden Fliehkräfte keine bzw. vernachlässigbare Meßfehler verursachen.

**Patentansprüche**

1. Drucksensor zur Erfassung des Luftdrucks im Inneren von schlauchlosen Reifen von Kraftfahrzeugen auf einer Felge (1) mit zwei außen an einem trommelförmigen Grundkörper (2) umlaufenden Randwülsten, wobei jeweils ein radial äußerer Abschnitt der Randwülste an dem annähernd radial inneren Rand des Reifens anliegt, und wobei der radial bzw. annähernd radial innere Abschnitt der Randwülste zusammen mit dem trommelförmigen Grundkörper der Felge zum Inneren des Reifens hin offen ist und wobei der Drucksensor (10) in einer Bohrung (9) des zum Inneren des Reifens offenen Wulstes befestigt ist, dadurch gekennzeichnet, daß ein Substrat (28) in einer dem Reifeninneren zugewandten, stirnseitigen Ausnehmung (33) eines Sensorgehäuses (11) eingesetzt und mit dem zentralen Substratbereich im Sensorgehäuse (11) befestigt ist, wobei wenigstens ein Sensorelement (26, 27) im äußeren Bereich auf dem Substrat (28) angeordnet ist.

2. Drucksensor nach Anspruch 1, dadurch gekennzeichnet, daß das Substrat (28) eine zentrale Bohrung (29) aufweist und im Bereich der Bohrung (27) mit dem Gehäuse (11) vergossen ist.

3. Drucksensor nach Anspruch 1 und 2, dadurch gekennzeichnet, daß der Grundkörper des Gehäuses (11) eine zentrale Bohrung (25) aufweist, in die eine sich aus der zentralen Bohrung (25) heraus erstreckende, mit einem Schutzmantel (12) versehene Anschlußleitung eingesetzt ist.

4. Drucksensor nach Anspruch 3, dadurch gekennzeichnet, daß Gehäuse (11) und Schutzmantel (12) aus Edelstahl hergestellt und miteinander verschweißt sind.

5. Drucksensor nach einem der Ansprüche 1 bis 4, dadurch gekennzeichnet, daß das Substrat (28) in seinem zentralen Bereich neben der zentralen Bohrung (25) weitere Bohrungen (30) aufweist, in welche die Enden (31) der Anschlußleiter (13) aufgenommen sind.

6. Drucksensor nach Anspruch 5, dadurch gekennzeichnet, daß das Substrat (28) mit Leiterbahnen (32) versehen ist, an welche die elektrischen Anschlüsse der Sensorelemente (26, 27) gebondet sind, und welche zu den weiteren Bohrungen (30) in dem Substrat (28) führen und dort mit den Enden (31) der Anschlußleiter (13) kontaktiert sind.

7. Drucksensor nach einem der Ansprüche 5 oder 6, dadurch gekennzeichnet, daß die zentrale Bohrung (25) und die weiteren Bohrungen (30) des Substrats (28) zusammen mit den elektrischen Leitern (13) in einer Vergußmasse eingebettet und dadurch gegen das Gehäuse (11) isoliert sind.

8. Drucksensor nach Anspruch 2 und 7, dadurch gekennzeichnet, daß die Vergußmasse zur elektrischen Isolation der Leitungsanschlüsse (Enden 31) und gleichzeitig zur Befestigung des Substrats (28) in einer zentralen Ausnehmung (33) des Gehäuses (11) mit einer Hinterschneidung (34) dient.

9. Drucksensor nach einem der Ansprüche 1 bis 8, dadurch gekennzeichnet, daß die Sensorelemente (26, 27) auf der dem Reifeninneren abgewandten Seite des Substrats (28) angeordnet sind.

10. Drucksensor nach Anspruch 9, dadurch gekennzeichnet, daß in dem Gehäusebereich unterhalb der Sensorelemente (26, 27) eine mit einem Gel (37) gefüllte umlaufende Aussparung (35) vorgesehen ist.

## Revendications

1. Capteur de pression servant à mesurer la pression d'air à l'intérieur de pneus sans chambre de véhicules automobiles montés sur une jante (1) comportant deux bourrelets de bordure circulaires extérieurs sur un corps de base (2) formant tambour, une partie radiale extérieure du bourrelet de bordure appuyant sur la bordure intérieure à peu près radiale du pneu, la partie intérieure radiale, respectivement à peu près radiale, du bourrelet de bordure étant ouverte, avec le corps de base formant tambour de la jante, vers l'intérieur du pneu, et le capteur de pression (10) étant disposé dans un alésage (9) du bourrelet ouvert vers l'intérieur du pneu, caractérisé en ce qu'un substrat (28) est inséré dans un évidement (33) frontal, tourné vers l'intérieur du pneu, d'un boîtier de capteur (11) et fixé à la zone centrale du substrat dans le boîtier de capteur (11), au moins un élément de capteur (26, 27) étant disposé, dans la zone extérieure, sur le substrat (28).

2. Capteur de pression selon la revendication 1, caractérisé en ce que le substrat (28) présente un alésage (29) central et est scellé avec le boîtier (11) dans la zone de l'alésage (27).

3. Capteur de pression selon la revendication 1 ou 2, caractérisé en ce que le corps de base du boîtier (11) présente un alésage central (25) dans lequel est insérée une ligne de raccordement s'étendant à l'extérieur de l'alésage central (25), pourvue d'une enveloppe de protection (12).

4. Capteur de pression selon la revendication 3, caractérisé en ce que le boîtier (11) et l'enveloppe de protection (12) sont en acier allié et soudés ensemble.

5. Capteur de pression selon l'une des revendications 1 à 4, caractérisé en ce que le substrat (28) présente dans sa zone centrale, outre l'alésage central (25), d'autres alésages (30) dans lesquels sont logées les extrémités (31) des conducteurs de raccordement (13).

6. Capteur de pression selon la revendication 5, caractérisé en ce que le substrat (28) est pourvu de pistes conductrices (32), sur lesquelles sont bondérisés les raccordements électriques des éléments de capteur (26, 27), et qui mènent aux autres alésages (30) ménagés dans le substrat (28) et y sont mis en contact avec les extrémités (31) des conducteurs de raccordement (13).

7. Capteur de pression selon la revendication 5 ou 6, caractérisé en ce que l'alésage central (25) et les autres alésages (30) du substrat (28) sont noyés, conjointement avec les conducteurs électriques (13), dans une masse de scellement et sont, de ce fait, isolés vis-à-vis du boîtier (11).

8. Capteur de pression selon les revendications 2 et 7, caractérisé en ce que la masse de scellement sert à l'isolation électrique des raccordements de ligne (extrémités 31) et simultanément à la fixation du substrat (28) dans un évidement central (33) du boîtier (11), avec une contre-dépouille.

9. Capteur de pression selon l'une des revendications 1 à 8, caractérisé en ce que les éléments de capteur (26, 27) sont disposés sur la face du substrat (28) qui est éloignée de l'intérieur du pneu.

10. Capteur de pression selon la revendication 9, caractérisé en ce qu'un évidement circulaire (35) rempli d'un gel (37) est prévu dans la zone du boîtier qui est située au-dessous de l'élément capteur (26, 27).

## Claims

1. Pressure sensor for sensing the air pressure in the interior of tubeless tyres of motor vehicles on a rim (1) having two marginal beads encircling the outside of a drum-shaped basic body (2), a radially outer section of the marginal beads in each case bearing against the approximately radially inner margin of the tyre, and the radially or approximately radially inner section of the marginal beads, together with the drum-shaped basic body of the rim, being open towards the interior of the tyre, and the pressure sensor (10) being fixed in a bore (9) of the bead open towards the interior of the tyre, characterized in that a substrate (28) is inserted in a front recess (33), facing the interior of the tyre, of a sensor housing (11) and is fixed with the central substrate area in the sensor housing (11), at least one sensor element (26, 27) being arranged in the outer area on the substrate (28).

2. Pressure sensor according to Claim 1, characterized in that the substrate (28) has a central bore (29) and is encapsulated in the housing (11) in the area of the bore (27) [sic].

3. Pressure sensor according to Claims 1 and 2, characterized in that the basic body of the housing (11) has a central bore (25) into which a connecting line extending out of the central bore (25) and provided with a protective shell (12) is inserted.

4. Pressure sensor according to Claim 3, characterized in that the housing (11) and protective shell (12) are made of high-grade steel and are welded to one another.

5. Pressure sensor according to one of Claims 1 to 4, characterized in that the substrate (28), in its central area next to the central bore (25) has further bores (30) in which the ends (31) of the connecting conductors (13) are accommodated.

6. Pressure sensor according to Claim 5, characterized in that the substrate (28) is provided with conductor tracks (32) to which the electrical connections of the sensor elements (26, 27) are bonded and which lead to the further bores (30) in the substrate (28) and are electrically bonded there to the ends (31) of the connecting conductors (13).

7. Pressure sensor according to either of claims 5 or 6, characterized in that the central bore (25) and the further bores (30) of the substrate (28) are embedded together with the electrical conductors (13) in an encapsulating compound and are thereby insulated from the housing (11).

8. Pressure sensor according to Claims 2 and 7, characterized in that the encapsulating compound serves to electrically insulate the line connections (ends 21) and at the same time to fix the substrate (28) in a central recess (33) of the housing (11), having an undercut (34).

9. Pressure sensor according to one of Claims 1 to 8, characterized in that the sensor elements (26, 27) are arranged on the side of the substrate (28) remote from the interior of the tyre.

10. Pressure sensor according to Claim 9, characterized in that an encircling recessed portion (35) filled with a gel (37) is provided in the housing area below the sensor elements (26, 27).

FIG.1

# FIG. 2

2

# FIG. 3